(19) Europäisches Patentamt / European Patent Office / Office européen des brevets

(11) **EP 4 549 531 A1**

(12) **EUROPEAN PATENT APPLICATION**
published in accordance with Art. 153(4) EPC

(43) Date of publication:
07.05.2025 Bulletin 2025/19

(21) Application number: 23831325.8

(22) Date of filing: 23.06.2023

(51) International Patent Classification (IPC):
*C09J 187/00* (2006.01)   *B32B 15/08* (2006.01)
*B32B 15/20* (2006.01)   *B32B 27/00* (2006.01)

(52) Cooperative Patent Classification (CPC):
**B32B 15/08; B32B 15/20; B32B 27/00;**
**C09J 187/00**

(86) International application number:
**PCT/JP2023/023413**

(87) International publication number:
**WO 2024/004883 (04.01.2024 Gazette 2024/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.06.2022 JP 2022103880**

(71) Applicant: **Nihon Parkerizing Co., Ltd.**
**Tokyo 103-0027 (JP)**

(72) Inventors:
• **NAKAHARA,Takahiro**
**Tokyo 103-0027 (JP)**
• **IZUMI,Mayuko**
**Tokyo 103-0027 (JP)**

(74) Representative: **Arnold & Siedsma**
**Bezuidenhoutseweg 57**
**2594 AC The Hague (NL)**

(54) **ADHESIVE AGENT FOR RESIN, AND LAYERED BODY**

(57)   An adhesive for resin that exhibits excellent adhesion between a copper-based material substrate and a resin substrate is provided. An adhesive for resin includes one or both of: a Maillard reaction product (C) made from a carbohydrate (A) and/or a reductone (B), and an amine compound (G); and a caramelization reaction product (D) made from carbohydrates (A) and/or a reductone (B).

**Description**

FIELD OF THE INVENTION

The present invention relates to an adhesive for resin and a laminate.

BACKGROUND OF THE INVENTION

Copper-clad laminates are made by laminating a copper-based material substrate (such as copper foil or copper alloy foil) on one or both sides of a resin substrate (such as a prepreg, which is a composite material of an organic compound and an inorganic compound, or a resin film), and are widely used in the manufacture of printed wiring boards, and the like.

The copper-based material substrate used in copper-clad laminates is generally subjected to a surface roughening treatment in order to ensure the required adhesion to the resin substrate. For example, Patent Literature 1 discloses a surface treatment agent that is useful for roughening a copper surface or a copper alloy surface and that can provide a copper surface or a copper alloy surface having deep irregularities and that has good adhesion to resins such as prepregs and solder resists.

PRIOR ART

Patent Literature

[Patent Literature 1] Japanese Patent Application Publication No. H07-292483

SUMMARY OF THE INVENTION

On the other hand, in recent years, as communication speeds have increased, electric signals have become increasingly high frequency, and there is a demand for printed wiring boards that can accommodate this (high frequency printed wiring boards). Specifically, there is a demand for copper-based material substrates and resin substrates that can suppress transmission loss. If the surface roughness of the copper-based material substrate is high, conductor loss tends to increase due to the skin effect, and it is therefore undesirable to roughen the surface of the copper-based material substrate to form deep irregularities, as in conventional copper-clad laminates.

In addition, in the high frequency range, materials with poor dielectric properties (high dielectric constant and dielectric tangent) have significant dielectric loss, so a resin material with excellent dielectric properties (low relative dielectric constant and dielectric tangent) is desirable. However, materials with excellent dielectric properties tend to have low electrostatic interaction with other materials and low adhesion to other materials.

For these reasons, when a copper-clad laminate is applied to a printed wiring board for highfrequency applications, it is required to achieve sufficient adhesion between a copper-based material substrate (particularly a copper-based material substrate with low surface roughness) and a resin substrate (particularly a resin substrate with excellent dielectric properties).

In view of the above circumstances, an object of the present invention in one embodiment is to provide an adhesive for resin that has excellent adhesion between a copper-based material substrate and a resin substrate. In addition, an object of the present invention in another embodiment is to provide a laminate comprising such an adhesive for resin.

The present invention relates to the following aspects.

[1] An adhesive for resin, comprising one or both of a Maillard reaction product (C) and a caramelization reaction product (D), wherein:

the Maillard reaction product (C) made from a carbohydrate (A) and/or a reductone (B), as well as an amine compound (G) ; and
the caramelization reaction product (D) made from a carbohydrate (A) and/or a reductone (B).

[2] A laminate comprising: a copper-based material substrate, a layer of the adhesive for resin according to [1], and a resin substrate, in this order.

[3] An adhesive for resin, comprising one or both of a Maillard reaction product (C) and a caramelization reaction product (D), wherein:

the Maillard reaction product (C) is made from a carbohydrate (A) and/or a reductone (B), as well as an amine compound (G) and/or an amine equivalent (H); and

the caramelization reaction product (D) is made from a carbohydrate (A) and/or a reductone (B).

[4] A laminate comprising: a copper-based material substrate, a layer of the adhesive for resin according to [3], and a resin substrate, in this order.

According to one embodiment of the present invention, it is possible to provide an adhesive for resin that has excellent adhesion between a copper-based material substrate and a resin substrate. In particular, it is possible to provide an adhesive for resin that exhibits excellent adhesion between a copper-based material substrate with low surface roughness and a resin substrate with excellent dielectric properties. Therefore, for example, by using the adhesive for resin, it is possible to provide a copper-clad laminate having excellent adhesion between a copper-based material substrate having low surface roughness and a resin substrate having excellent dielectric properties. The copper-clad laminate can be suitably used for printed wiring boards, particularly highfrequency printed wiring boards.

DETAILED DESCRIPTION OF THE INVENTION

<1. Adhesive for resin>

In one embodiment of the present invention, an adhesive for resin comprises one or both of a Maillard reaction product (C) and a caramelization reaction product (D). The Maillard reaction product (C) is made from a carbohydrate (A) and/or a reductone (B), and an amine compound (G) and/or an amine equivalent (H); and the caramelization reaction product (D) is made from a carbohydrate (A) and/or a reductone (B). The adhesive for resin may contain additives other than the Maillard reaction product (C) and the caramelization reaction product (D). Examples of additives include a reaction accelerator (III), a crosslinking agent (IV), a pH adjuster, etc., which are added during the production of the adhesive, as well as inorganic compounds and organic compounds, and the like, which are added during the production of the adhesive.

[1-1. Carbohydrate (A)]

As used herein, a carbohydrate (A) refers to monosaccharides and polysaccharides (hereinafter referred to as compound (E)), as well as derivatives of compound (E) (hereinafter referred to as carbohydrate derivative (F)). A monosaccharide refers to a polyhydric alcohol compound having three or more consecutive carbon atoms, one or more aldehyde or ketone groups, and two or more hydroxyl groups, and is a carbohydrate that cannot be hydrolyzed any further. A polysaccharide refers to a combination of two or more monosaccharides. The bond type of the monosaccharides constituting the polysaccharide is not particularly limited, and examples thereof include an ether bond (in particular, a glycosidic bond) and an ester bond. The carbohydrate (A) may have either a chain structure or a cyclic structure, and may be provided as a mixture of both. As used herein, a carbohydrate derivative (F) refers to a compound in which the functional groups of the compound (E) are partially converted, and a salt compound thereof. The partial conversion of the functional group means, for example, carboxylation, amination, etherification, esterification (for example, carboxylate, phosphate, sulfate, nitrate, carbonate, and the like), acylation, silylation, siloxylation, aldehyde conversion, ketonization, or halogenation of hydroxyl groups, as well as hydroxylation or carboxylation of aldehyde groups, and dehydration by elimination of the hydroxyl group and its β-hydrogen, and the like. Further, examples of the salt compounds thereof include alkali metal salts such as lithium, sodium, potassium, rubidium, and cesium; alkaline earth metal salts such as beryllium, magnesium, calcium, strontium, and barium; and transition metal salts such as titanium, vanadium, chromium, manganese, iron, cobalt, nickel, copper, zirconium, niobium, and molybdenum. Typical examples of the carbohydrate derivative (F) include, but are not limited to, sugar acids, sugar alcohols, amino sugars, dehydrated derivatives of sugar, and salt compounds thereof.

Specific examples of monosaccharides include, but are not limited to, dihydroxyacetone, glyceraldehyde, erythrose, threose, ribose, arabinose, xylose, lyxose, allose, altrose, glucose, mannose, gulose, idose, galactose, talose, erythrulose, xylulose, ribulose, psicose, fructose, sorbose, tagatose, sedoheptulose, coriose, deoxyribose, fucose, fuculose, rhamnose, alomethylose, quinovose, antiallose, talomethylose, digitalose, digitoxose, cymarose, tyvelose, abecose, paratose, colitose, ascarylose, and the like.

Specific examples of polysaccharides and their derivatives include, but are not limited to, dihydroxyacetone dimer, glyceraldehyde dimer, sucrose, lactulose, lactose, maltose, trehalose, cellobiose, kojibiose, nigerose, isomaltose, isotrehalose, neotrehalose, sophorose, laminaribiose, gentiobiose, turanose, maltulose, palatinose, gentiobiulose, mannobiose, melibiose, melibiulose, neolactose, galactosucrose, scillabiose, neohesperidose, rutinose, rutinulose, vicianose, xylobiose, primeverose, trehalosamine, maltitol, cellobionic acid, lactosamine, lactosediamine, lactobionic acid, lactitol, hyalobiuronic acid, sucralose, nigerotriose, maltotriose, melezitose, maltotriulose, raffinose, kestose, nystose, nigerotetraose, stachyose, acarbose, lactose fructose oligosaccharides, maltooligosaccharides, isomaltooligosaccharides, gentiooligosaccharides, nigerooligosaccharides, galactooligosaccharides, xylooligosaccharides, soybean oligosaccharides, fructooligosaccharides, mannan oligosaccharides, glycogen, starch, cellulose, glucan, fructan, hydroxyethyl cellulose, methylcellulose, ethyl cellulose, hydroxyethyl methylcellulose, hydroxypropyl cellulose, hydroxypropyl methylcellulose, carboxymethyl cellulose, salts of carboxymethyl cellulose (e.g. sodium salt), alginic acid, propylene glycol alginate, agarose, cellulose derivatives, guar gum, carrageenan, agar, chitosan, gellan gum, dextrin, dextran, starch, pullulan, and the like.

As used herein, a sugar acid refers to a compound in which one or more aldehyde groups or terminal hydroxyl groups of the compound (E) are converted to a carboxyl group. Specific examples thereof include, but are not limited to, glyceric acid, erythronic acid, threonic acid, ribonic acid, arabinonic acid, xylonic acid, lyxonic acid, allonic acid, altronic acid, gluconic acid, mannonic acid, gulonic acid, idonic acid, galactonic acid, talonic acid, erythronic acid, threonic acid, ribalic acid, arabinaric acid, xylaric acid, allaric acid, altraric acid, glucaric acid, mannaric acid, idaric acid, galactaric acid, glucuronic acid, mannuronic acid, guluronic acid, galacturonic acid, iduronic acid, and the like.

As used herein, a sugar alcohol refers to a compound in which one or more aldehyde groups or ketone groups of the compound (E) are converted to a hydroxy group. Specific examples thereof include, but are not limited to, sorbitol, mannitol, erythritol, pentaerythritol, threitol, arabinitol, ribitol, xylitol, galactitol, rhamnitol, isomaltose, maltitol, lactitol, palatinose, and the like.

As used herein, an amino sugar refers to a compound in which one or more hydroxy groups of compound (E) have been substituted with amino groups, and a compound in which the amino groups of the compound (E) have been further acylated. Specific examples thereof include, but are not limited to, glucosamine, galactosamine, N-acetylglucosamine, N-carbamoylglucosamine, N-acetylgalactosamine, chitin, chitosan, chondroitin, hyaluronic acid, heparin, and the like. In addition, some of the amino sugars also fall under the category of amine compounds (G) or amine equivalents (H) described below.

As used herein, a dehydrated derivative of sugar refers to a compound produced by an intramolecular dehydration reaction of the compound (E). Specific examples of the dehydrated derivative include, but are not limited to, furfural, hydroxymethylfurfural, and the like.

The carbohydrate (A) as a raw material for obtaining the Maillard reaction product (C) and/or the caramelization reaction product (D) is preferably a monosaccharide, a polysaccharide, a sugar acid, or a salt thereof. Among them, compounds having reducing properties (for example, the ability to reduce $Cu^{2+}$ to $Cu^{+}$ in the Fehling reaction) (typically reducing sugars) are more preferred, and monosaccharides are even more preferred. As the carbohydrate (A), one type may be used alone, or two or more types may be used in combination.

[1-2. Reductone (B)]

As used herein, a reductone (B) refers to a compound having a chemical structure represented by the following formula 1 in the molecule. Specific examples include, but are not limited to, ascorbic acid, erythorbic acid, and salts thereof (for example, alkali metal salts, alkaline earth metal salts, transition metal salts, and double salts of the above metal salts), and the like. In addition, so long as the compound has the following chemical structure in the molecule, it may be a compound in which a part of functional groups has been converted, or a salt compound thereof. Examples of "a part of functional groups has been converted" are the same as those described in the explanation of the carbohydrate (A). The reductone (B) may be used alone or in combination of two or more.

$$-C(OH)=C(OH)-C(=O)- \ ... \qquad \text{(Formula 1)}$$

[1-3. Maillard reaction product (C)]

As used herein, a Maillard reaction product (C) refers to a brown substance produced by reaction of the carbohydrate (A) and/or the reductone (B) with an amine compound (G), which are raw materials. In the Maillard reaction, it is considered the carbohydrate (A) and/or the reductone (B) combine with amine compounds (G), and further reactions such as decomposition, oxidation, condensation, and polymerization are thought to be involved. However, the reaction pathway is complicated, and it is extremely difficult to carry out a component analysis of the Maillard reaction product (C). Therefore, in the present invention, it is considered that the Maillard reaction product (C) is obtained by producing a brown substance through the reaction of the carbohydrate (A) and/or the reductone (B) with the amine compound (G).

In the present invention, whether or not a brown substance is produced is determined as follows. A liquid sample is prepared in which the mass concentration of the solute and/or dispersoid of the adhesive for resin to be measured is 10 mass%, and when the yellowness index (YI) of the liquid sample is 2.5 or more, it is determined that "a brown substance has been produced." The YI can be measured using a commercially available spectrophotometer. For example, using a spectrophotometer (SD7000) produced by Nippon Denshoku Industries Co., Ltd., the tristimulus values (X, Y, Z) in the XYZ color system are calculated from the transmittance measured under the conditions of auxiliary illuminant C and a 2-degree visual field by a spectrophotometric colorimetric method. Based on ASTM D1925, YI can be calculated by applying the tristimulus values to the following formula:

$$YI = 100 \ (1.28X - 1.06Z) \ / \ Y$$

Pure water is used as the solvent and/or dispersion medium when diluting the adhesive for resin to prepare a liquid sample. When concentrating the adhesive for resin for preparation of the liquid sample, a method can be used in which the adhesive for resin is placed in a container and left to stand in the air at 35 °C or below to evaporate the solvent and/or dispersion medium, or a method can be used in which the solvent and/or dispersion medium is distilled off under reduced pressure at 35 °C or below using a rotary evaporator.

In addition, the mass concentration of the liquid sample can be calculated from the weight of the adhesive for resin before and after drying.

In addition, in the measurement with a spectrophotometer, if the color of the liquid sample is too dark when the adhesive for resin concentration is adjusted to 10% by mass so that the transmittance cannot be measured, the adhesive for resin is diluted until the transmittance can be measured, and if the measured YI is 2.5 or more, it is determined that "a brown substance has been produced."

As used herein, the amine compound (G) refers to ammonia, a primary amine, a secondary amine, and salts thereof. The amine compound (G) also includes amino acids, peptides, proteins, and salts thereof. As the amine compound (G), primary or lower amines (specifically, primary amines and ammonia) and salts thereof are preferred than secondary amines, and ammonia and salts thereof are particularly preferred. In the amine compound (G), the carbon adjacent to the amino group is preferably a primary, secondary or tertiary carbon. In addition, examples of the amine compound (G) include arylamines and salts thereof, alkylamines and salts thereof, heteroarylamines and salts thereof, and ammonia and salts thereof. Among these, one or more selected from arylamines, alkylamines, heteroarylamines, and ammonia are preferred, one or more selected from alkylamines, heteroarylamines, and ammonia are more preferred, and ammonia is particularly preferred. The amine compound (G) may be used alone or in combination of two or more kinds, and may be used in combination with one or more kinds of amine equivalents (H), which will be described later.

As the ammonia and its salts, ammonia and a salt compound composed of ammonia and acid are used. Acids that form salt with ammonia include: inorganic acids such as hydrofluoric acid, hydrochloric acid, hydrobromic acid, hydroiodic acid, hypochlorous acid, chlorous acid, chloric acid, perchloric acid, nitric acid, nitrous acid, sulfuric acid, sulfurous acid, peroxomonosulfuric acid, peroxodisulfuric acid, phosphoric acid, phosphorous acid, hypophosphorous acid, hydrocyanic acid, cyanic acid, thiocyanic acid, carbonic acid, boric acid, silicic acid, chromic acid, dichromate, permanganic acid, molybdic acid, and tungstic acid; and organic acids such as formic acid, acetic acid, propionic acid, butyric acid, valeric acid, lauric acid, myristic acid, palmitic acid, stearic acid, oleic acid, lactic acid, malic acid, citric acid, benzoic acid, phthalic acid, isophthalic acid, terephthalic acid, salicylic acid, gallic acid, oxalic acid, malonic acid, succinic acid, glutaric acid, adipic acid, maleic acid, fumaric acid, malic acid, gluconic acid, methanesulfonic acid, benzenesulfonic acid, monochloroacetic acid, dichloroacetic acid, trichloroacetic acid, trifluoroacetic acid, and peracetic acid. The acids which form salts with ammonia may be used alone or in combination of two or more.

Examples of the secondary amine include compounds having a chemical structure of $R^1R^2NH$, in which $R^1$ and $R^2$ are each independently any one of an unsubstituted or optionally substituted alkyl group, aryl group, and heteroaryl group. In addition, mention can be made to unsubstituted or optionally substituted saturated heterocyclic amines, as well as unsubstituted or optionally substituted unsaturated heterocyclic amines with or without aromaticity. Examples of the substituent include an alkyl group, an alkenyl group, an alkynyl group, an aryl group, a hydroxyl group, a mercapto group, a carbonyl group (for example, an aldehyde group, a ketone group, a carboxyl group, an acyl group, an ester group, an amide group, and the like), an imino group, a thiocarbonyl group, a fluoro group, a chloro group, a bromo group, an iodo group, a nitro group, a sulfo group, a cyano group, an alkoxy group, a trifluoromethyl group, an azo group, a silyl group, or a siloxy group, and the llike. Examples of the secondary amine include dimethylamine, diethylamine, dipropylamine, dibutylamine, diallylamine, diphenylamine, dibenzylamine, diethanolamine, ethylmethylamine, N-methylaniline, methylbenzylamine, aziridine, azetidine, pyrrolidine, piperidine, morpholine, pyrrole, pyrazole, imidazole, 1,2,3-triazole, 1,2,4-triazole, tetrazole, indoline, indole, and proline, and the like.

Examples of the primary amine include compounds having a chemical structure of $RNH_2$, in which R is any one of an unsubstituted or optionally substituted alkyl group, aryl group, and heteroaryl group that does not have an -NH- partial structure in the ring structure. Examples of the primary amine include, methylamine, ethylamine, propylamine, butylamine, octylamine, cyclohexylamine, allylamine, ethanolamine, propanolamine, benzylamine, furfurylamine, phenylethylamine, aniline, methoxyaniline, trifluoromethylaniline, aminobenzoic acid, aminosalicylic acid, nitroaniline, cyanoaniline, fluoroaniline, chloroaniline, bromoaniline, iodoaniline, aminophenol, aminothiophenol, naphthylamine, aminopyridine, hydroxylamine amine, aminotriazine, aminothiazole, amino-1,3,4-thiadiazole, amino-1,2,3-thiadiazole, 2-amino-5-mercapto-1,3,4-thiadiazole, aminopyrazine, aminopyrimidine, amino-1,2,4-triazine, amino-1,3,5-triazine, levodopa, dopamine, noradrenaline, glycine, alanine, valine, leucine, isoleucine, cysteine, methionine, serine, threonine, aspartic acid, glutamic acid, glutamine, arginine, phenylalanine, tyrosine, and the like.

The amine compound (G) may be a monovalent amine having one amino group in the molecule and a salt thereof, or a polyvalent amine having two or more amino groups in the molecule and a salt thereof. Further, the amine compound (G) may be a monomer or a polymer. The amino group of the polyvalent amine may include a primary amino group, a secondary amino group, or a combination of both. Examples of the polyvalent amine include, ethylenediamine, diethylenetriamine, hexamethylenediamine, triethylenetetramine, piperazine, phenylenediamine, aminobenzylamine, diaminonaphthalene, diaminopyridine, triaminopyridine, diaminopyrimidine, triaminopyrimidine, diamino-1,3,5-triazine, triamino-1,3,5-triazine, aminopyrazole, aminoimidazole, aminobenzimidazole, amino-1H-tetrazole, amino-1,2,4-triazo diamino-1,2,4-triazole, diaminodiphenylmethane, dimethylthiotoluenediamine, diaminodiphenylsulfone, diaminodiphenylether, bis(3-aminophenoxy)benzene, bis[2-(4-aminophenyl)-2-propyl]benzene, adenine lysine, histidine, tryptophan, gelatin, albumin, casein, fibroin, keratin, egg yolk protein, egg white protein, yeast protein, collagen, chitosan, hydrazine, and the like.

As used herein, the amine equivalent (H) refers to a compound which easily generates the amine compound (G) by hydrolysis. In the present invention, it is sufficient that ammonia, a primary amine, or a secondary amine is generated from the amine equivalent (H) and undergoes a Maillard reaction with the carbohydrate (A) and/or the reductone (B), and in order to promote hydrolysis, the reaction may be performed under heated or warmed condition, or a catalyst, an acid, or a base may be added. Examples of the amine equivalent (H) include, urea derivatives represented by $R^1R^2NC(=O)NR^3R^4$, thiourea derivatives represented by $R^1R^2NC(=S)NR^3R^4$, carbamate compounds represented by $R^1OC(=O)NR^2R^3$, O-thiocarbamate compounds represented by $R^1OC(=S)NR^2R^3$, S-thiocarbamate compounds represented by $R^1SC(=O)NR^2R^3$, isourea derivatives represented by $R^1OC(=NR^2)NR^3R^4$, isothiourea derivatives represented by $R^1SC(=NR^2)NR^3R^4$, dithiocarbamate compounds represented by $R^1SC(=S)NR^2R^3$, amidine compounds represented by $R^1C(=NR^2)NR^3R^4$, and guanidine derivatives represented by $R^1R^2NC(=NR^3)NR^4R^5$, and the like. Specific examples include urea, thiourea, carbamic acid, amidine, acetamidine, guanidine, and derivatives thereof, and the like. It should be noted that a compound containing $C(=N)-NR^1R^2$ on the aromatic ring (for example, 3-amino-1H-1,2,4-triazole, melamine, or the like) is not the amine equivalent (H) but is the amine compound (G). $R^1$ to $R^5$ each independently represent any one of a hydrogen atom, an unsubstituted or optionally substituted alkyl group, an aryl group, and a heteroaryl group. As the amine equivalent (H), one type may be used alone, or two or more types may be used in combination, and may be used in combination with the above-mentioned amine compound (G).

[1-4. Reaction conditions for Maillard reaction]

The reaction conditions for the Maillard reaction are not particularly limited, and it is sufficient that the raw materials, which are the carbohydrate (A) and/or the reductone (B), react with the amine compound (G) and/or the amine compound (G) generated from the amine equivalent (H) to produce a brown substance. The concentrations of the carbohydrate (A), the reductone (B) and the amine compound (G) during the reaction, the reaction time, the reaction pressure, the presence or absence and type of a solvent and/or a dispersion medium (I), the reaction temperature (II), the addition of a reaction promoter (III), the addition of a crosslinking agent (IV), the adjustment of the pH (V), and the like can be appropriately determined. When the amine equivalent (H) is used, the reaction conditions may be appropriately adjusted such that the amine equivalent (H) is decomposed in the reaction system to produce the amine compound (G) and the Maillard reaction occurs at the same time. Alternatively, the reaction conditions for the Maillard reaction may be appropriately adjusted after the amine compound (G) is produced in the reaction system.

The solvent and/or the dispersion medium (I) is not particularly limited, but is preferably a polar aprotic or protic solvent and/or dispersion medium, is more preferably a polar protic solvent, and is particularly preferably water. In addition, as the solvent and/or the dispersion medium (I), one type may be used alone, or two or more types may be used in combination. The water content in the solvent and/or the dispersion medium is preferably 10% by mass or more, more preferably 30% by mass or more, even more preferably 50% by mass or more, even more preferably 70% by mass or more, particularly preferably 90% by mass or more, and most preferably water alone.

The reaction temperature (II) is not particularly limited, but heating is preferable. The reaction temperature (II) is preferably, for example, 40 °C to 200 °C, 60 °C to 200 °C, 70 °C to 200 °C, 80 °C to 200 °C, 90 °C to 200 °C, or 95°C to 200 °C.

The reaction promoter (III) (for example, Lewis acid catalyst, radical initiator, oxidizing agent, and the like) is not particularly limited and may or may not be added, but any additive that generally promotes the Maillard reaction can be used. The Lewis acid catalysts include, for example, metal salts that generate metal ions such as zinc ions, lead ions, iron ions, and copper ions in aqueous solution. Examples of the radical initiator include peroxides such as hydrogen peroxide, tert-butyl hydroperoxide, peroxodisulfuric acid, and ethaneperoxoic acid, and their salts; and oxoacids such as perchloric acid and periodic acid, and their salts. Examples of the oxidizing agent include nitric acid and its salts, permanganate, chromate, dichromate, hypochlorite, iron (III) chloride, iron (III) fluoride, iron (III) nitrate, iron (III) sulfate, etc. Examples of other reaction accelerators (III) include sodium chloride, phosphoric acid and its salts, ammonium sulfite, ammonium metabisulfite, sodium sulfite, sodium metabisulfite, potassium sulfite, potassium metabisulfite, and sulfurous acid gas, and the like. As the reaction accelerator (III), one type may be used alone, or two or more types may be used in combination.

A known cross-linking agent (IV) may or may not be used in the Maillard reaction. The cross-linking agent is not particularly limited, and may be any compound that can be incorporated into the structure of the Maillard reaction product to form a cross-linked structure. Examples of the crosslinking agent include zirconium carbonate salts, titanium alkoxides, silane coupling agents, colloidal silica, isocyanates, blocked isocyanates, glyoxal, polycarboxylic acids and their anhydrides, phosphoric acid and phosphates, polycarboxylic acids (for example, succinic acid, citric acid, maleic anhydride, and the like) and their salts, epoxy compounds, aziridine compounds, urethane compounds, hydrazide compounds, oxazoline compounds, carbodiimide compounds, methylol melamine compounds (for example, methylol melamine and alkylated methylol melamine, and the like), acetoacetyl compounds. As the crosslinking agent (IV), one type may be used alone, or two or more types may be used in combination.

The pH (V) at the start of the reaction is not particularly limited, but since the pH range in which the reaction easily proceeds can change depending on the amine compound (G) or the amine equivalent (H) used, it may be appropriately adjusted. The Maillard reaction generally proceeds easily in a pH range that is not strongly acidic (for example, pH 2.0 to pH 14.0, pH 3.0 to pH 13.5, pH 4.0 to pH 13.5, or pH 5.0 to pH 13.5). However, when an amine compound (G) that causes a radical reaction, such as ammonium peroxodisulfate, is used, the reaction proceeds even in strong acidity, so that the pH can be selected from a wide range (for example, pH 0.1 to pH 14.0, pH 0.2 to pH 14.0, pH 0.3 to pH 14.0, or pH 1.0 to pH 14.0). In addition, a pH adjuster may be appropriately added to adjust the pH, but is not necessarily required. The pH adjuster is not particularly limited, but examples thereof include inorganic acids, organic acids, inorganic bases, and organic bases. Examples of inorganic acids include hydrochloric acid, nitric acid, sulfuric acid, and phosphoric acid. Examples of organic acids include acetic acid, propionic acid, oxalic acid, maleic acid, adipic acid, gallic acid, butyric acid, salicylic acid, benzoic acid, methanesulfonic acid, benzenesulfonic acid, chloroacetic acid, formic acid, phthalic acid, fumaric acid, citric acid, tartaric acid, acrylic acid, methacrylic acid, and the like. Examples of the inorganic base include ammonia, ammonium hydrogen carbonate, lithium hydroxide, sodium hydroxide, potassium hydroxide, magnesium hydroxide, calcium hydroxide, barium hydroxide, and the like. The organic base may be the above-mentioned amine compound (G) or the like. As the pH adjuster, one type may be used alone, or two or more types may be used in combination.

[1-5. Caramelization reaction product (D)]

As used herein, a caramelization reaction product (D) refers to a brown substance produced when the carbohydrate (A) and/or the reductone (B), which are raw materials, themselves undergo reactions such as decomposition, oxidation, condensation, and polymerization due to heat or the like. The caramelization reaction has a complicated reaction pathway, and it is extremely difficult to perform a component analysis of the caramelization reaction product (D). Therefore, in the present invention, the caramelization reaction product (D) is regarded as being obtained when the carbohydrate (A) and/or the reductone (B) themselves react to produce a brown substance. The determination of whether or not a brown substance is produced is carried out by the method described above.

[1-6. Reaction conditions for caramelization reaction]

The reaction conditions for the caramelization reaction are not particularly limited, and may be any condition that a brown substance is produced by heating, etc. of carbohydrate (A) and/or reductone (B), which are raw materials. The concentrations of the carbohydrate (A) and the reductone (B) during the reaction, the reaction time, the reaction pressure, the presence or absence and type of a solvent and/or a dispersion medium (i), the reaction temperature (ii), the addition of a reaction promoter (iii), the addition of a crosslinking agent (iv), the adjustment of the pH (v), and the like can be appropriately determined.

The reaction conditions (i) to (iv) are the same as the reaction conditions (I) to (IV) in section [1-4. Reaction conditions for Maillard reaction], and therefore the explanation thereof will be omitted. The pH (v) at the start of the reaction is not particularly limited, and a pH adjuster may be added as appropriate to adjust the pH, but this is not necessarily required. The pH adjuster is not particularly limited, but examples thereof include inorganic acids, organic acids, inorganic bases, and organic bases. Examples of inorganic acids include hydrochloric acid, nitric acid, sulfuric acid, and phosphoric acid. Examples of organic acids include acetic acid, propionic acid, oxalic acid, maleic acid, adipic acid, gallic acid, butyric acid, salicylic acid, benzoic acid, methanesulfonic acid, benzenesulfonic acid, chloroacetic acid, formic acid, phthalic acid, fumaric acid, citric acid, tartaric acid, acrylic acid, methacrylic acid, and the like. Examples of the inorganic base include ammonia, ammonium hydrogen carbonate, lithium hydroxide, sodium hydroxide, potassium hydroxide, magnesium hydroxide, calcium hydroxide, barium hydroxide, and the like. The organic base may be the above-mentioned amine compound (G) or the like. As the pH adjuster, one type may be used alone, or two or more types may be used in combination.

As the Maillard reaction product (C) and the caramelization reaction product (D), commercially available products can also be used. An example of the commercially available product is commercially available caramel color. Caramel color is generally classified into four types: caramel I, caramel II, caramel III, and caramel IV (Ministry of Health, Labor and Welfare, Consumer Affairs Agency, "Food Additives Official Standards 2018, 9th Edition"). Commercially available caramel color may be used in either liquid or powder form.

Caramel I is obtained by heat-treating edible carbohydrates such as starch hydrolysates, molasses or sugars, or by heat-treating them with the addition of an acid or alkali, without using any sulfite compounds or ammonium compounds. Caramel II is obtained by adding a sulfite compound during the reaction of caramel I. Caramel I and caramel II correspond to the caramelization reaction product (D). Specific commercially available products include: liquid caramel produced by Morita Food System Co., Ltd. (product names: S-70, S-65, S-60, S-60S, SS, SSS, SM, SB, MK, and F), powdered caramel produced by the same company (product names: SAP and FP); liquid caramel produced by Semba Tohka Industries Co.,Ltd. (product names: Caramel KS-S, Caramel KS-SB, Caramel KS-SNT, Caramel KS-NB, and Caramel KS-45), powdered caramel produced by the same company (product names: Powdered Caramel S-W, Powdered Caramel S-180W, Powdered Caramel KS-W, Powdered Caramel KS-SS, Powdered Caramel C-85, Powdered Caramel KS-LW, Powdered Caramel KS-SSW, Powdered Caramel M-W, and Powdered Caramel BD-W); and caramel color I produced by KANTO CHEMICAL CO.,INC., and the like.

Caramel III is obtained by adding an ammonium compound, or by adding an acid or alkali to edible carbohydrates such as starch hydrolysates, molasses or sugars, followed by heat treatment, without using any sulfite compounds. Caramel IV is obtained by adding a sulfite compound during the reaction of caramel III. Caramel III and caramel IV correspond to the Maillard reaction products (C). Specific commercially available products include: liquid caramel (product names: SL, MC, MR, MU, CL, CL-150, MS, MH, and DS) produced by Morita Food System Co., Ltd., powdered caramel produced by the same company (product name: MRP); liquid caramel (product names: Caramel TO, Caramel MG-18, Caramel S, Caramel TB, Caramel KD, Caramel BD-2, Caramel Z-80, Caramel Z-100, Caramel Z-35, and Caramel WH-N-92) produced by Semba Tohka Industries Co., Ltd., powdered caramel (product names: Caramel Powder MG-18W, Caramel Powder KD-W, and Caramel Powder Z-35W) produced by the same company; and caramel color III produced by KANTO CHEMICAL CO.,INC., and the like.

[1-7. Method for producing adhesive for resin]

According to one embodiment of the present invention, there is provided a method for producing an adhesive for resin. The method for producing an adhesive for resin comprises, for example, one or both of step 1 and step 2:

Step 1: in a reaction system containing the carbohydrate (A) and/or the reductone (B), as well as the amine compound (G) and/or the amine equivalent (H) as raw materials, a Maillard reaction occurs to produce a brown substance. The state of the raw materials in the reaction system may be gas, liquid, solid, or a combination thereof. The phase in the reaction system may include any of a gas phase, a liquid phase, and a solid phase, but preferably includes a liquid phase. A solvent and/or a dispersion medium may or may not be used.

Step 2: in a reaction system containing the carbohydrate (A) and/or the reductone (B) as raw materials, a caramelization reaction occurs to produce a brown substance. The state of the raw materials in the reaction system may be gas, liquid, solid, or a combination thereof. The phase in the reaction system may include any of a gas phase, a liquid phase, and a solid phase, but preferably includes a liquid phase. A solvent and/or a dispersion medium may or may not be used.

The carbohydrate (A), the reductone (B), the amine compound (G), the amine equivalent (H), the Maillard reaction, and the caramelization reaction are as described above.

<2. Laminate>

A laminate according to one embodiment of the present invention comprises a copper-based material substrate, a layer of the above-mentioned adhesive for resin, and a resin substrate, in this order. Typically, the laminate is provided as a copper clad laminate comprising a sheet of copper-based material, a layer of the adhesive for resin described above, and a resin sheet, in this order. In the copper-clad laminate, the copper-based material sheet may be laminated on one side of the resin sheet, or on both sides of the resin sheet. In addition, the copper-based material sheet may be laminated on the entire surface of one or both sides of the resin sheet, or may be laminated only on a part of the surface. The layer of the adhesive for resin is usually formed on the entire surface of the copper-based material sheet which is to be bonded to the resin sheet, but may be formed only on a portion of the surface of the copper-based material sheet which is to be bonded to the resin sheet. Similarly, the layer of the adhesive for resin may be formed on the entire surface of the resin sheet that is to be bonded to the copper-based material sheet, or may be formed only on a portion of the surface of the resin sheet that is to be bonded to the copper-based material sheet. In addition, when the copper-based material sheet is laminated on both sides of the resin sheet, at least one of the copper-based material sheets may be laminated on the resin sheet via a layer of the adhesive for resin according to one embodiment of the present invention. However, it is preferable that both copper-based material sheets are laminated to the resin sheet via a layer of the adhesive for resin according to one embodiment of the present invention. The two copper-based material sheets laminated on both sides of the resin sheet may be the same or different, and the two layers of adhesive for resin may also be the same or different. When the copper-based material sheet is laminated on one side of the resin sheet, another layer may be laminated on the side of the resin sheet opposite to the side on which the copper-based material sheet is laminated. Examples of another layer include, but are not limited to, a release film layer for protecting the resin sheet. In addition, the copper-clad laminate may further include another layer laminated on the surface of the copper-based material sheet opposite to the surface on which the resin sheet is laminated. As another layer, it may be a layer of the adhesive for resin, that is, a layer containing one or both of the Maillard reaction product (C) and the caramelization reaction product (D).

[2-1. Copper-based material substrate]

The copper-based material substrate is a substrate containing copper or a copper alloy as a main component (the concentration of copper or copper alloy is 50% by mass or more, preferably 60% by mass or more, more preferably 75% by mass or more, and even more preferably 85% by mass or more, for example, 50 to 100% by mass), and is typically provided in the form of a sheet such as a plate or foil. The sheet may be composed of a single layer, or may be composed of two or more laminated layers. The copper content in the copper alloy is not particularly limited as long as it contains copper, but is preferably 50 mass% or more, more preferably 60 mass% or more, even more preferably 75 mass% or more, and particularly preferably 85 mass% or more. Specific examples of copper alloys include copper-zinc alloys, copper-iron-phosphorus alloys, copper-tin alloys, copper-zirconium alloys, copper-nickel alloys, copper-silver alloys, and the like, as defined in JIS H3100: 2012 or the Copper Development Association (CDA) standard, but are not limited to these. The copper-based material substrate may be one which has been subjected to a surface treatment generally applied to copper foil or copper alloy foil of a copper-clad laminate used in a printed wiring board. Examples of the surface treatment include plating treatments such as single metal plating treatment or alloy plating treatment, chromate treatment, and the like. The plating treatment may be any known plating treatment, and for example, a single metal plating treatment or an alloy plating treatment containing one or more elements selected from the group consisting of nickel, zinc, tin, cobalt, molybdenum, copper, tungsten, phosphorus, arsenic, chromium, vanadium, titanium, aluminum, gold, silver, platinum group elements, iron, and tantalum may be used. The plating treatment may be a single layer plating or a multi-layer plating of two or more layers. In addition, the copper-based material substrate may be one that has been surface-treated with a coupling agent such as a silane coupling agent. However, according to the present invention, excellent adhesion between the copper-based material substrate and the resin substrate can usually be obtained without surface-treating the copper-based material substrate with a coupling agent. In addition, such surface treatment can be carried out according to a known method.

The copper-based material substrate is not particularly limited, and examples of the substrate that can be suitably used include copper plates, copper alloy plates, copper foils, and copper alloy foils, such as rolled copper plates, rolled copper alloy plates, rolled copper foils, rolled copper alloy foils, electrolytic copper foils, and electrolytic copper alloy foils, as well as those having the above-mentioned surface treatment applied thereto. In addition, a copper foil with a carrier and a copper alloy foil with a carrier, as well as those whose surface of copper foil and copper alloy foil have been subjected to the above-mentioned surface treatment, can also be suitably used. In this case, the copper foil that is not a carrier of the copper foil with a carrier and the copper alloy foil that is not a carrier of the copper alloy foil with a carrier can be used as the copper-based material substrate of the laminate according to one embodiment of the present invention. In addition, laminates having a copper-based material substrate on the surface thereof, such as a copper-plated material, a copper alloy-plated material, a copper clad material, and a copper alloy clad material, and those having the surface of these copper-based material substrates subjected to the above-mentioned surface treatment can also be suitably used. In this case, the copper-based material substrate included in the laminate becomes the copper-based material substrate of the laminate according to one embodiment of the present invention. The carrier of the copper foil with a carrier or the copper alloy foil with a carrier is not particularly limited, and any commonly used carrier such as a metal foil such as an electrolytic copper foil or a resin film can be used. The thickness of the carrier is not particularly limited and can be appropriately selected. The copper foil with a carrier and the copper alloy foil with a carrier are generally, for example, an electrolytic copper foil with a carrier and an electrolytic copper alloy foil with a carrier, but are not limited thereto. In addition, a resin substrate can be laminated to a copper-based material substrate contained in a copper-clad laminate produced by a known method or according to this embodiment via the above-mentioned adhesive for resin, and the laminate obtained in this manner is also a laminate according to an embodiment of the present invention.

In general, it is preferable that the copper-based material substrate has a smooth surface. In particular, when the copper-based material substrate is provided in the form of a sheet such as a plate or foil, it is preferable that both sides are smooth. Specifically, the ten-point average roughness (Rzjis) of the surface is preferably 15 $\mu$m or less, more preferably 10 $\mu$m or less, even more preferably 5 $\mu$m or less, particularly preferably 2.5 $\mu$m or less, and most preferably 1.5 $\mu$m or less. In addition, it is generally preferred that the surface of the copper-based material substrate is not subjected to a roughening treatment. The lower limit of the ten-point average roughness (Rzjis) of the surface of the copper-based material substrate is not particularly limited, and generally, the closer to 0 $\mu$m, the more preferable. The ten-point average roughness of the surface of the copper-based material substrate is illustratively in the range of 0.0001 $\mu$m to 14 $\mu$m, preferably in the range of 0.001 $\mu$m to 12 $\mu$m, and more preferably in the range of 0.01 $\mu$m to 10 $\mu$m. In addition, the ten-point average roughness (Rzjis) can be measured in accordance with JIS B0601: 2001. When the copper-based material substrate is in the form of a sheet, the thickness is not particularly limited and can be appropriately selected depending on the application, but is usually preferably 0.5 $\mu$m to 1000 $\mu$m, more preferably 1 $\mu$m to 100 $\mu$m. Further, the bonding area of the copper-based material substrate to the resin substrate is not particularly limited and can be appropriately selected depending on the application.

[2-2. Layer of adhesive for resin]

The adhesion amount of the layer of the adhesive for resin, that is, the layer containing one or both of the Maillard reaction product (C) and the caramelization reaction product (D), per unit area is not particularly limited as long as the desired adhesive strength is obtained. However, it is preferably 0.1 to 3000 mg/m$^2$, more preferably 0.5 to 2000 mg/m$^2$, even more preferably 0.5 to 1500 mg/m$^2$, even more preferably 0.5 to 1000 mg/m$^2$, even more preferably 0.5 to 700 mg/m$^2$, particularly preferably 0.5 to 600 mg/m$^2$, and most preferably 0.5 to 500 mg/m$^2$.

It should be noted that the adhesion amount of the layer of the adhesive for resin is the adhesion amount per one side (one layer). The adhesion amount of the layer of the adhesive for resin can be indirectly measured using X-ray fluorescence analysis (XRF), by adding an element that is not contained in the adhesive to the adhesive. Specifically, one example of such a method is to add a compound (hereinafter referred to as compound $\beta$) having a known amount of an element (hereinafter referred to as element $\alpha$) that is not contained in the adhesive to the adhesive at a specific ratio, and using X-ray fluorescence analysis, the adhesion amount per unit area of the layer of adhesive is calculated from the adhesion amount of a known amount of the element $\alpha$ per unit area. The amount of compound $\beta$ added to the adhesive is, for example, 5% by mass to 40% by mass based on the total solid content. The content of the element $\alpha$ in the compound $\beta$ is, for example, 30% to 80% in terms of mass. The compound $\beta$ is not particularly limited, and may be, for example, ammonium zirconium carbonate, in which case the element $\alpha$ may be Zr. The compound $\beta$ may be used in the form of an aqueous solution.

The thickness of the layer of the adhesive for resin is not particularly limited and can be appropriately selected such that the adhesion amount is within the above range, but is preferably 0.5 to 3000 nm, more preferably 0.5 to 2000 nm, even more preferably 0.5 to 1500 nm, particularly preferably 0.5 to 1000 nm, and most preferably 0.5 to 700 nm.

[2-3. Resin substrate]

The resin substrate may be any substrate containing a resin. Accordingly, the resin substrate may be composed of only a resin, or may contain components other than a resin. When the resin substrate contains a component other than a resin, the resin may be the main component (resin concentration is 50% by mass or more), or may not be the main component. Examples of components other than resin include inorganic fibers such as carbon fibers and glass fibers. An example of a resin substrate containing components other than a resin is a substrate in which inorganic fibers (which may be in the form of a woven or nonwoven fabric) are impregnated with a resin or a resin composition, typically a prepreg. The resin substrate is typically provided in the form of a sheet such as a film or a prepreg. The sheet may be composed of a single layer, or may be composed of two or more layers laminated together. In addition, the sheet may be soft (flexible) or hard (rigid). The resin contained in the resin substrate may be one type of resin or a mixture of two or more types of resins. Further, the resin substrate may contain inorganic particles (fillers) and various other additives, as necessary. It should be noted that components other than the resin that can be contained in the resin substrate are not particularly limited, and components other than those described above may also be used.

The resin contained in the resin substrate is not particularly limited and can be appropriately selected depending on the application, but a thermoplastic resin can be preferably used.

Further, a resin having a relative permittivity at a temperature of 25 °C and 10 GHz of 5.0 or less is preferable, a resin having a relative permittivity of 4.0 or less is more preferable, and a resin having a relative permittivity of 3.5 or less is even more preferable. Typically, a resin having a relative permittivity of more than 1.0 to 5.0, more typically from 1.1 to 5.0 at a temperature of 25 °C and 10 GHz can be used. The relative permittivity of the resin can be measured by a cavity resonator method in accordance with JIS C2565: 1992.

Specific examples of the resin include: fluororesins (such as polytetrafluoroethylene (PTFE), perfluoroalkoxy fluororesin (PFA), tetrafluoroethylene-hexafluoropropylene copolymer (FEP), ethylene-tetrafluoroethylene copolymer (ETFE), ethylene-chlorotrifluoroethylene copolymer (ECTFE), and tetrafluoroethylene-perfluoroalkyl vinyl ether copolymer), liquid crystal polymer (LCP), aromatic polyether ketones such as polyether ether ketone (PEEK), polyphenylene ether (PPE), epoxy resin, bismaleimide triazine resin, cycloolefin polymer, polyimide, and the like. Among these, PEEK and fluororesins (for example, PTFE, PFA, FEP, ETFE, ECTFE, tetrafluoroethylene-perfluoroalkylvinyl ether copolymers, and the like) are preferred, fluororesins are more preferred, and PTFE is particularly preferred.

As the resin substrate, resin films and prepregs commercially available as resin substrates for printed wiring boards can also be used.

When the resin substrate is in the form of a sheet, the thickness is not particularly limited and can be appropriately selected depending on the application, etc., but is usually preferably 10 $\mu$m to 1000 $\mu$m, more preferably 20 $\mu$m to 500 $\mu$m.

[2-4. Method for producing laminate]

A laminate, typically a copper-clad laminate, according to one embodiment of the present invention can be produced by bonding a copper-based material substrate and a resin substrate with the above-mentioned adhesive for resin sandwiched therebetween, Preferably, it can be produced by forming a layer of the adhesive for resin on the surface of the copper-based material substrate, and then adhering the resin substrate onto the layer of the adhesive for resin. The adhesive for resin may be provided in liquid form, but may also be provided in sheet form (for example, sheet-type hot melt adhesive). When the adhesive for resin is in liquid form, an example of a method is to form a layer of the adhesive for resin on the surface of a copper-based material substrate as described below, and then adhere the resin substrate onto the layer of the adhesive for resin. When the adhesive for resin is in sheet form, an example of the method is to sandwich the sheet-like adhesive between the copper-based material substrate and the resin substrate to bond them together. A preferred method for producing a laminate according to one embodiment of the present invention will be described below as an example, but the method for producing a laminate is not limited to the following method.

First, a layer of the adhesive for resin is formed on a copper-based material substrate, typically a copper-based material sheet such as copper foil, copper plate, copper alloy foil or copper alloy plate (which may have been subjected to the above-mentioned surface treatment), or, in the case of using a laminate having a copper-based material substrate on its surface, on the copper-based material substrate (which may have been subjected to the above-mentioned surface treatment). The layer of the adhesive for resin can be formed, for example, by dissolving or dispersing the adhesive for resin containing one or both of the Maillard reaction product (C) and the caramelization reaction product (D) in a solvent (for example, water) to prepare an adhesive liquid for forming a layer of the adhesive for resin, applying this to the surface of a copper-based material substrate, and then drying.

The content of each compound in the adhesive liquid is not particularly limited and can be appropriately selected.

The solvent used in the adhesive liquid is not particularly limited and may be appropriately selected from commonly used solvents. Organic solvents may also be used, but water is usually preferred. Two or more types of solvents may be used in combination.

The adhesive liquid may or may not contain various commonly used additives as necessary (for example, inorganic compounds, organic compounds such as resins (for example, acrylic resins, epoxy resins, urethane resins, ether resins, amide resins, alkylene vinyl acetate copolymers, polyvinyl alcohols, polyalkylene glycols, styrene-maleic anhydride copolymers, oxidized modified polyalkylene resins, thickening polysaccharides, cellulose nanofibers, and the like, which are generally used as binders), surfactants, defoamers, leveling agents, antibacterial and antifungal agents, dyes, pigments, fragrances, antiblocking agents, release agents, rust inhibitors, and the like).

The application of the adhesive liquid is not particularly limited and can be carried out by a known method, such as a bar coating method, a spray method, a spin coating method, a roll coating method, a curtain coating method, an electrostatic powder coating method, a fluidized bed coating method, or a dipping method.

The drying conditions after application of the adhesive liquid are not particularly limited and can be selected appropriately, but it is usually preferable to heat and dry the copper-based material substrate such that the peak metal temperature (PMT) reaches 60 °C to 300 °C. The drying temperature is not particularly limited as long as the adhesive liquid can be dried to form a layer of the adhesive for resin, but it is more preferable that the peak metal temperature (PMT) of the copper-based material substrate is within the range of 60 °C to 250 °C, and particularly preferably within the range of 60 °C to 200 °C. The drying time is not particularly limited as long as it is possible to dry the adhesive liquid and form a layer of the adhesive for resin, but it may be, for example, 1 minute or more, 5 minutes or more, 10 minutes or more, 30 minutes or more, 180 minutes or less, 120 minutes or less, or 60 minutes or less.

In addition, before forming the layer of the adhesive for resin, the copper-based material substrate may be subjected to a cleaning treatment such as acid degreasing, alkali degreasing, acid cleaning, alkali cleaning, or water washing, and drying after the cleaning treatment, if necessary. Such cleaning treatment and drying can be performed according to a known method.

Next, a resin substrate, typically a resin sheet such as a resin film or prepreg, is superimposed on the layer of the adhesive for resin thus formed on the surface of the copper-based material substrate, and then heating and pressing is performed to bond them together, thereby producing a laminate according to this embodiment. When producing a laminate in which a copper-based material substrate is laminated on both sides of a resin substrate, the copper-based material substrate may be bonded to both sides of a resin substrate such as a resin film or prepreg simultaneously via a layer of the adhesive for resin, or may be bonded to each side in turn.

The method of bonding the copper-based material substrate having a layer of the adhesive for resin formed on the surface thereof to the resin film or prepreg is not particularly limited, and can be performed using a known heating and pressing device. The pressing and heating conditions are also not particularly limited, and can be appropriately selected depending on the material and type of resin used. For example, the pressing pressure can be 1 to 1000 $kgf/cm^2$, the pressing time can be 0.1 to 1440 minutes, and the pressing temperature can be 80 °C to 600 °C, and typically the pressing pressure can be 5 to 100 $kgf/cm^2$, the pressing time can be 0.5 to 600 minutes or less, and the pressing temperature can be 120 °C to 450 °C.

During the above heating and pressing, the pressure may be reduced from normal pressure and then the heating and pressing may be performed.

EXAMPLES

Hereinafter, the present invention will be described in more detail below with reference to Examples and Comparative Examples, but the present invention is not limited to the following Examples.

<1. Production of Maillard reaction product (C) and caramelization reaction product (D)>

As raw materials for the Maillard reaction product (C), the following carbohydrates (A) or reductones (B) as well as the amine compounds (G) or amine equivalents (H) were used, and as raw materials for the caramelization reaction product (D), the following carbohydrates (A) or reductones (B) were used. In addition, the following additives (I) were used as an additive during the reaction. Unless otherwise specified, the carbohydrates (A), the reductones (B), the amine compounds (G), the amine equivalents (H), and the additives (I) were produced by FUJIFILM Wako Pure Chemical Corporation.

[Carbohydrates (A)]

(A-1) Dihydroxyacetone (monosaccharide/ketose/triose)
(A-2) Xylose (monosaccharide/aldose/pentose)
(A-3) Arabinose (monosaccharide/aldose/pentose)
(A-4) Glucose (monosaccharide/aldose/hexose)
(A-5) Fructose (monosaccharide/ketose/hexose)
(A-6) Maltose (disaccharide)
(A-7) Gluconic acid (50% by weight aqueous solution) (sugar acid)
(A-8) Pullulan (produced by Hayashibara Co., Ltd.) (polysaccharide)
(A-9) Cellogen 5A (registered trademark) (Na salt of carboxymethylcellulose) (produced by Daiichi Kogyo Seiyaku Co., Ltd.) (polysaccharide)
(A-10) Gum arabic (produced by Sumitomo Pharma Food & Chemical Co., Ltd.) (polysaccharide)
(A-11) Sorbitol (sugar alcohol)

[Reductones (B)]

(B-1) Ascorbic acid (reductone)
(B-2) Sodium ascorbate (salt of reductone)

[Amine compounds (G)]

(G-1) Ammonia water (28.0-30.0% by mass)

(G-2) Dibutylamine
(G-3) Aniline
(G-4) Trimethylenetetramine
(G-5) Epomin (registered trademark) P-1000 (produced by NIPPON SHOKUBAI CO., LTD.)
(G-6) Ammonium chloride
(G-7) Ammonium nitrate
(G-8) Glycine
(G-9) L-amino asparagine monohydrate
(G-10) 3-amino-1H-1,2,4-triazole
(G-11) 3,5-diamino-1H-1,2,4-triazole
(G-12) Ammonium peroxodisulfate

[Amine equivalents (H)]

(H-1) Urea
(H-2) Thiourea

[Additives (I)]

(I-1) 30% hydrogen peroxide solution
(I-2) 35% hydrochloric acid
(I-3) 50% sodium hydroxide solution

[Production conditions of Maillard reaction product (C)]

[Production Condition 1: C-1 to C-16, C-18 to C-36]

Based on the formulations shown in Tables 1 and 2, ion-exchanged water, carbohydrate (A) or reductone (B), and amine compound (G) or amine equivalent (H) were mixed to prepare aqueous solutions. For the Maillard reaction products using additives (C-13, C-23 to C-25), the additives were added at this stage. The pH of the aqueous solution at this point of time at room temperature is shown in Tables 1 and 2. Next, the above pre-reaction aqueous solution was placed in a 100 mL polypropylene container, sealed, and heated in a circulation type hot gas drying oven at a liquid temperature of 95 °C for the time shown in Tables 1 and 2 to produce a solution containing a Maillard reaction product (C). The produced Maillard reaction products were designated C-1 to C-16 and C-18 to C-36, respectively. The production of a Maillard reaction product was judged by checking whether a brown substance was produced using a spectrophotometer (SD7000) produced by Nippon Denshoku Industries Co., Ltd. according to the method described earlier. When a brown substance was produced, it was recorded as "Yes" in Tables 1 and 2. The same applies to the following production examples.

[Production condition 2: C-17]

Based on the formulation shown in Table 1, ion-exchanged water, reductone (B-1), and 30% by mass ammonia water (G-1) (produced by FUJIFILM Wako Pure Chemical Corporation) were mixed to prepare an aqueous solution. The pH of the aqueous solution at room temperature at this point of time is shown in Table 1. This aqueous solution and a stirrer chip were placed in a 100 mL glass beaker, and heated with stirring for 8 hours at a liquid temperature of 90 °C to produce a solution containing a Maillard reaction product (C). The produced Maillard reaction product was designated C-17.

[Production conditions of caramelization reaction product (D)]

[Production Condition 3: D-1 to D-8]

Based on the formulation shown in Table 3, ion-exchanged water and carbohydrate (A) were mixed to prepare an aqueous solution. For caramelization reaction products (D-6 to D-8) using additives, the additives were added at this stage. The pH of the aqueous solution at room temperature at this point of time is shown in Table 3. Subsequently, the above aqueous solution before the reaction was placed in a 100 mL polypropylene container, sealed, and heated in a circulation type hot gas drying oven at a liquid temperature of 95 °C. for the time shown in Table 3 to produce a solution containing a caramelization reaction product (D). The produced caramelization reaction products were designated (D-1 to D-8). The production of a caramelization reaction product was determined by checking whether a brown substance was produced using a spectrophotometer (SD7000) produced by Nippon Denshoku Industries Co., Ltd. according to the method described earlier. When a brown substance was produced, it was recorded as "Yes" in Table 3. The same applies to the following production examples.

[Production Condition 4: D-9 to D-10]

An aqueous solution was prepared by mixing ion-exchanged water and reductone (B) based on the formulation shown in Table 3. The pH of the aqueous solution at this point of time at room temperature is shown in Table 3. This aqueous solution and a stirrer chip were placed in a 100 mL glass beaker, and heated with stirring for 8 hours at a liquid temperature of 90 °C to produce a solution containing a caramelization reaction product (D). The produced caramelization reaction products were designated (D-9 to D-10).

Table 1

| Maillard reaction products | C-1 | C-2 | C-3 | C-4 | C-5 | C-6 | C-7 | C-8 | C-9 | C-10 | C-11 | C-12 | C-13 | C-14 | C-15 | C-16 | C-17 |
|---|---|---|---|---|---|---|---|---|---|---|---|---|---|---|---|---|---|
| Carbohydrates (A) or reductones (B) | A-1 | A-2 | A-3 | A-4 | A-5 | A-6 | A-7 | B-1 | B-1 | A-8 | A-9 | A-10 | A-11 | A-11 | A-5 | A-6 | B-1 |
| Amount of (A) or (B) added (g) | 3.00 | 3.00 | 3.00 | 3.00 | 3.00 | 3.16 | 6.00 | 3.00 | 3.00 | 3.00 | 3.00 | 3.00 | 13.50 | 13.50 | 9.00 | 9.47 | 10.00 |
| Amine compounds (G) | G-1 | G-1 | G-1 | G-1 | G-1 | G-1 | G-1 | G-1 | G-1 | G-1 | G-1 | G-1 | G-1 | G-1 G-12 | G-12 | G-12 | G-1 |
| Amount of amine compounds (G) added (g) | 0.94 | 1.13 | 1.13 | 0.94 | 0.94 | 0.99 | 0.87 | 0.97 | 1.93 | 0.94 | 0.94 | 0.94 | 4.20 | 4.20 3.00 | 3.00 | 3.00 | 3.22 |
| Additives (I) | - | - | - | - | - | - | - | - | - | - | - | - | 1-1 | - | - | - | - |
| Amount of additives (1) added (g) | - | - | - | - | - | - | - | - | - | - | - | - | 3.00 | - | - | - | - |
| Water (g) | 26.06 | 25.87 | 25.87 | 26.06 | 26.06 | 25.85 | 23.13 | 26.03 | 25.07 | 26.06 | 26.06 | 26.06 | 9.30 | 9.30 | 18.00 | 17.53 | 36.78 |
| Total amount of reaction solution (g) | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 | 50.00 |
| Production conditions | 1 | 1 | 1 | 1 | 1 | 1 | 1 | 1 | 1 | 1 | 1 | 1 | 1 | 1 | 1 | 1 | 2 |
| pH at start of reaction | 11.3 | 11.4 | 11.4 | 11.4 | 11.4 | 11.1 | 9.9 | 5.5 | 10.2 | 11.9 | 12.4 | 11.9 | 10.8 | 10.2 | 0.6 | 0.4 | 4.7 |
| Reaction time (h) | 20 | 20 | 20 | 20 | 20 | 20 | 20 | 20 | 20 | 20 | 20 | 20 | 20 | 20 | 20 | 92 | 8 |
| Production of brown substance | Yes | Yes | Yes | Yes | Yes | Yes | Yes | Yes | Yes | Yes | Yes | Yes | Yes | Yes | Yes | Yes | Yes |

Table 2

| Maillard reaction products | C-18 | C-19 | C-20 | C-21 | C-22 | C-23 | C-24 | C-25 | C-26 | C-27 | C-28 | C-29 | C-30 | C-31 | C-32 | C-33 | C-34 | C-35 | C-36 |
|---|---|---|---|---|---|---|---|---|---|---|---|---|---|---|---|---|---|---|---|
| Carbohydrates (A) or reductones (B) | A-4 | A-4 | A-4 | A-4 | A-4 | A-4 | A-4 | A-4 | A-4 | A-4 | A-4 | A-4 | A-4 | A-4 | A-4 | B-1 | B-1 | B-1 | B-2 |
| Amount of (A) or (B) added (g) | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 | 3.37 |
| Amine compounds (G) or amine equivalents (H) | G-2 | G-3 | G-4 | G-5 | G-6 | G-6 | G-6 | G-6 | G-7 | G-8 | G-9 | G-10 | G-11 | H-1 | H-2 | G-4 | G-5 | G-5 | G-8 |
| Amount of (G) or (H) added (g) | 2.15 | 1.55 | 0.61 | 2.39 | 0.89 | 0.89 | 0.89 | 0.89 | 1.33 | 1.25 | 1.25 | 1.40 | 0.83 | 0.50 | 0.63 | 0.81 | 2.44 | 3.66 | 1.28 |
| Additives (I) | - | - | - | - | - | I-3 | I-3 | I-3 | - | - | - | - | - | - | - | - | - | - | - |
| Amount of additives (1) added (g) | - | - | - | - | - | 0.32 | 0.58 | 1.44 | - | - | - | - | - | - | - | - | - | - | - |
| Water (g) | 24.85 | 25.45 | 26.39 | 24.61 | 26.11 | 25.79 | 25.53 | 24.67 | 25.67 | 25.75 | 25.75 | 25.60 | 26.17 | 26.50 | 26.37 | 26.19 | 24.56 | 23.34 | 25.35 |
| Total amount of reaction solution (g) | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 | 30.00 |
| Production conditions | 1 | 1 | 1 | 1 | 1 | 1 | 1 | 1 | 1 | 1 | 1 | 1 | 1 | 1 | 1 | 1 | 1 | 1 | 1 |
| pH at start of reaction | 11.2 | 8.5 | 11.2 | 10.7 | 5.4 | 8.2 | 9.5 | 11.2 | 4.6 | 5.8 | 4.7 | 7.3 | 7.9 | 6.5 | 6.1 | 5.1 | 3.9 | 5.1 | 6.9 |
| Reaction time (h) | 40 | 40 | 20 | 20 | 40 | 20 | 20 | 20 | 40 | 20 | 20 | 20 | 20 | 40 | 40 | 20 | 20 | 20 | 20 |
| Production of brown substance | Yes | Yes | Yes | Yes | Yes | Yes | Yes | Yes | Yes | Yes | Yes | Yes | Yes | Yes | Yes | Yes | Yes | Yes | Yes |

Table 3

| Caramelization reaction products | D-1 | D-2 | D-3 | D-4 | D-5 | D-6 | D-7 | D-8 | D-9 | D-10 |
|---|---|---|---|---|---|---|---|---|---|---|
| Carbohydrates (A) or reductones (B) | A-4 | A-5 | A-6 | A-7 | A-9 | A-5 | A-6 | A-11 | B-1 | B-2 |
| Amount of (A) or (B) added (g) | 9.00 | 9.00 | 9.47 | 18.00 | 9.00 | 9.00 | 9.47 | 13.50 | 10.00 | 10.00 |
| Additives (I) | - | - | - | - | - | I-1 | I-1 | 1-2 | - | - |
| Amount of additives (I) added (g) | - | - | - | - | - | 3.00 | 3.00 | 2.50 | - | - |
| Water (g) | 21.00 | 21.00 | 20.53 | 12.00 | 21.00 | 18.00 | 17.53 | 14.00 | 40.00 | 40.00 |
| Total amount of reaction solution (g) | 30.00 | 30.00 | 30.00 | 30.00 | 30.00 | 30.00 | 30.00 | 30.00 | 50.00 | 50.00 |
| Production conditions | 3 | 3 | 3 | 3 | 3 | 3 | 3 | 3 | 4 | 4 |
| pH at start of reaction | 5.4 | 5.6 | 6.3 | 1.8 | 5.6 | 3.9 | 6.1 | 0.4 | 1.8 | 1.8 |
| Reaction time (h) | 92 | 92 | 92 | 20 | 92 | 20 | 92 | 92 | 8 | 8 |
| Production of brown substances | Yes | Yes | Yes | Yes | Yes | Yes | Yes | Yes | Yes | Yes |

<2. Produce of copper-clad laminates>

[Formation of a layer of adhesive for resin]

[Example 1]

As a copper-based material substrate, an electrolytic copper foil (thickness 18 $\mu$m, Rzjis 0.14 $\mu$m, Ra 0.05 $\mu$m) (K-1) having a heat-resistant plating layer and an electrolytic chromate layer in this order from the outside to the inside was prepared. The solid concentration of the Maillard reaction product (C-1) was adjusted with ion-exchanged water such that the layer of adhesive formed on the copper foil surface would have an adhesion amount of 12 mg/m$^2$, and the product was applied (bar coating method) to one surface of the copper foil. Thereafter, the copper foil was dried in a circulation type hot gas drying oven at 100 °C for 1 minute to form a layer of the adhesive on the copper foil surface.

[Adhesion between copper foil having a layer of adhesive formed thereon and a resin substrate]

A PTFE prepreg (produced by Rogers Corporation, product name "RO3003 Bondply", thickness 0.1 mm) (L-1) was laminated to the surface of the layer of adhesive of the copper foil on which the layer of adhesive was formed, and then the copper foil was wrapped in aluminum foil and bonded while being isolated from the atmosphere to produce a copper-clad laminate. The bonding conditions were a pressing pressure of 30 kgf/cm$^2$, a pressing time of 45 minutes, and a pressing temperature of 370 °C.

[Examples 2 to 67]

In Examples 2 to 67, the layer of adhesive was formed in the same manner as in Example 1, except that the adhesives shown in Table 4 (Maillard reaction products (C-2 to C-36), caramelization reaction products (D-1 to D-10), and commercially available caramel colors (J-1 to J-3 shown below)) were used, the solid content concentration was adjusted with ion-exchanged water such that the layer of adhesive formed on the copper foil surface had the adhesion amount shown in Table 4, and applied (bar coating method) to one surface of the copper-based material substrates shown in Table 4 (K-1 to K-3 shown below). Thereafter, a copper-clad laminate was produced in the same manner as in Example 1, except that the resin substrates (L-1 to L-3 shown below) shown in Table 4 were used and bonded under the conditions of the press time and press temperature shown in Table 4.

[Caramel color]

    (J-1) Commercially available caramel color, caramel I
    (J-2) Commercially available caramel color, caramel III
    (J-3) Commercially available caramel color, caramel IV

[Copper-based material substrate]

    (K-1) Electrolytic copper foil with a heat-resistant plating layer and an electrolytic chromate layer in this order from the outside to the inside (thickness 18 $\mu$m, Rzjis 0.14 $\mu$m, Ra 0.05 $\mu$m)
    (K-2) Electrolytic copper foil with a heat-resistant plating layer (thickness 18 $\mu$m, Rzjis 1.05 $\mu$m, Ra 0.20 $\mu$m)
    (K-3) Electrolytic copper foil (thickness 18 $\mu$m, Rzjis 0. 89$\mu$m, Ra 0.17$\mu$m)

[Resin substrate]

    (L-1) PTFE prepreg (produced by Rogers Corporation, product name "RO3003 Bondply", thickness 0.1mm) (relative permittivity at 10GHz of 3.0$\pm$0.04, dielectric loss tangent 0.0010)
    (L-2) ETFE sheet (produced by AS ONE Corporation, thickness 0.05mm) (relative permittivity at 10GHz of 2.6, dielectric loss tangent 0.0150)
    (L-3) PEEK-based prepreg (thickness 0.05mm) (relative permittivity at 10GHz of 3.1, dielectric loss tangent 0.0033)

[Comparative Examples 1 to 4]

Copper-clad laminates were produced in the same manner as in Example 1, except that aqueous solutions of carbohydrates (A-4, A-5, A-8) or reductone (B-1) shown in Table 5 were used to form the layer of the adhesive.

[Comparative Examples 5, 7 to 8, 16, 21, and 26]

Copper-clad laminates were produced in the same manner as in Example 1, except that no layer of adhesive was formed, and that the resin substrates (L-1 to L-3) or material substrates other than resin (O-1 to O-3 shown below) shown in Table 5 were used and bonded under the conditions of the press time and press temperature shown in Table 5.

[Comparative Example 6]

A copper-clad laminate was produced in the same manner as in Example 1, except that the copper-based material substrate (M-1) shown below was used, no layer of adhesive was formed, and bonding was performed under the conditions of the press time and press temperature shown in Table 5.
(M-1) Electrolytic copper foil (thickness 18 $\mu$m, Rzjis 1.77 $\mu$m, Ra 0.19 $\mu$m) having an adhesive layer of silane coupling agent, a heat-resistant plating layer, and an electrolytic chromate layer in this order from the outside to the inside

[Comparative Examples 9 to 15, 17 to 20, 22 to 25, 27 to 30]

A layer of adhesive was formed in the same manner as in Example 1., except that the adhesives shown in Table 5 (Maillard reaction products (C-4, C-17), caramelization reaction product (D-1), commercially available caramel color (J-2)) or commercially available water-based resins (N-1 to N-7 shown below) were used, and the solid content concentration was adjusted with ion-exchanged water such that the layer of the adhesive formed on the copper foil surface had the adhesion amount shown in Table 5. Thereafter, copper-clad laminates were produced in the same manner as in Example 1 except that the resin substrates (L-1 to L-3) shown in Table 5 or the material substrates other than resin (O-1 to O-3 shown below) were used, and bonding was performed under the conditions of the press time and press temperature shown in Table 5.

[Water-based resin]

(N-1) MODEPIX (registered trademark) 302 (produced by Arakawa Chemical Industries,Ltd.) (epoxy resin)
(N-2) GOHSENEX (registered trademark) LW-100 (produced by Nippon Synthetic Chemical Industry Co., Ltd.) (sulfo-modified PVOH)
(N-3) ARROWBASE (registered trademark) YA-6010 (produced by Unitika Ltd.) (modified polypropylene)
(N-4) PITZCOL (registered trademark) V-7154 (produced by DKS Co. Ltd.) (PVP/PVA)
(N-5) AQUALIC (registered trademark) HL415 (produced by Nippon Shokubai Co., Ltd.) (polyacrylic acid)
(N-6) BONCOT (registered trademark) CF-6140 (produced by DIC Corporation) (acrylic resin)
(N-7) ELITEL (registered trademark) KT-507 (produced by Unitika Ltd.) (ester resin) [Material substrate other than resin]
(O-1) Glass fiber cloth
(O-2) SUS foil (produced by AS ONE Corporation, thickness 0.1 mm)
(O-3) Aluminum foil (produced by MA Aluminum Corporation, thickness 12 $\mu$m)

For the glass fiber cloth (O-1), an epoxy resin prepreg (produced by Showa Denko Materials Co., Ltd., product name "GEA-679N") was placed in chloroform heated to 60 °C to completely dissolve, and only the glass fiber cloth was taken out. This was then immersed again in another chloroform heated to 60 °C to remove the remaining epoxy resin, and then dried at 80 °C for 1 minute in a circulation type drying oven.

[Ten-point average roughness (Rzjis) of copper foil surface]

The ten-point average roughness (Rzjis) and arithmetic average roughness (Ra) of the bonding surface of the copper foil with the resin used above were measured using a laser microscope (Keyence Corporation, VK-8701) in accordance with JIS B0601:2001.

[Adhesion amount of layer of adhesive on copper foil with layer of adhesive formed]

The adhesion amount of the layer of the adhesive was determined by the following method. A predetermined amount of an aqueous solution of ammonium zirconium carbonate was added to a Maillard reaction product (C-1) having a known solid content concentration to prepare a coating treatment agent for measuring the adhesion amount. At this time, the solid content ratio of ammonium zirconium carbonate to the total solid content was 15 mass%. Next, the prepared coating treatment agent is used to form a coating film on an electrolytic copper foil (K-1), which is a copper-based material substrate, by a bar coating method. Thereafter, the coating film was dried in a circulation type hot gas drying oven at 100 °C for 1 minute to form a dry coating film. The copper foil on which the above-mentioned dry coating film was formed was cut into a measurement sample of 4 cm width × 4 cm length, and analyzed with an X-ray fluorescence analyzer (ZSX Primus II produced by Rigaku Corporation) to determine the amount of zirconium attached per unit area. Based on the result, the adhesion amount per unit area of the entire dried coating film at a known solid content concentration can be calculated, so the above operation was performed at several solid content concentrations without changing the type of bar coat, and a two-axis graph (calibration curve) was created with the solid content concentration and adhesion amount as the axes. It was confirmed that the target adhesion amount was interpolated within the segment of the actually determined adhesion amount in the above two-axis graph, and the solid content concentration corresponding to the target adhesion amount was calculated. A copper-clad laminate for adhesion evaluation having a layer of adhesive with the target adhesion amount was produced using a Maillard reaction product (C-1) with a known solid content concentration to which no aqueous solution of ammonium zirconium carbonate had been added. In the same manner as described above, the relationship between the solid content concentration and the adhesion amount was determined for each adhesive (C-2 to C-36, D-1 to D-10, J-1 to J-3, and N-1 to N-7), and the solid content concentration was adjusted such that the adhesive layer formed on the copper foil surface had the adhesion amount shown in Tables 4 and 5. In addition, The relationship between the solid content concentration and the adhesion amount was determined for each combination of the adhesive (C-2 to C-36, D-1 to D-10, J-1 to J-3, and N-1 to N-7) and the electrolytic copper foil (K-1, K-2, or K-3) shown in Tables 4 and 5.

<3. Adhesion Evaluation>

The copper-clad laminates prepared in the above Examples and Comparative Examples were cut to a width of 0.3 cm and a length of 7 cm. The peel strength of the copper foil in the 90° direction was measured in accordance with JIS C5012:1993, and the adhesion was evaluated according to the following evaluation criteria. In this evaluation, a rating of 2 points or less was deemed to be poor in adhesion. The results are shown in Tables 4 and 5.

[Evaluation criteria: peel strength]

1 point: 0 N/cm or more but less than 1.0 N/cm
2 points: 1.0 N/cm or more but less than 2.5 N/cm
3 points: 2.5 N/cm or more but less than 5.0 N/cm
4 points: 5.0 N/cm or more but less than 7.5 N/cm
5 points: 7.5 N/cm or more but less than 10.0 N/cm
6 points: 10.0 N/cm or more

Table 4

|  | Adhesive | Copper-based material | Resin substrate | Press time | Press Temperature | Adhesion amount (mg/m$^2$) | Adhesion |
|---|---|---|---|---|---|---|---|
| Example 1 | C-1 | K-1 | L-1 | 45min | 370°C | 12 | 6 |
| Example 2 | C-2 | K-1 | L-1 | 45min | 370°C | 12 | 6 |
| Example 3 | C-3 | K-1 | L-1 | 45min | 370°C | 12 | 6 |
| Example 4 | C-4 | K-1 | L-1 | 45min | 370°C | 12 | 6 |
| Example 5 | C-5 | K-1 | L-1 | 45min | 370°C | 12 | 6 |
| Example 6 | C-6 | K-1 | L-1 | 45min | 370°C | 12 | 6 |
| Example 7 | C-7 | K-1 | L-1 | 45min | 370°C | 12 | 6 |
| Example 8 | C-8 | K-1 | L-1 | 45min | 370°C | 12 | 6 |
| Example 9 | C-9 | K-1 | L-1 | 45min | 370°C | 12 | 6 |
| Example 10 | C-10 | K-1 | L-1 | 45min | 370°C | 12 | 6 |
| Example 11 | C-11 | K-1 | L-1 | 45min | 370°C | 12 | 6 |
| Example 12 | C-12 | K-1 | L-1 | 45min | 370°C | 12 | 5 |
| Example 13 | C-13 | K-1 | L-1 | 45min | 370°C | 12 | 4 |
| Example 14 | C-14 | K-1 | L-1 | 45min | 370°C | 12 | 4 |
| Example 15 | C-15 | K-1 | L-1 | 45min | 370°C | 12 | 5 |
| Example 16 | C-16 | K-1 | L-1 | 45min | 370°C | 12 | 6 |
| Example 17 | C-17 | K-1 | L-1 | 45min | 370°C | 25 | 6 |
| Example 18 | C-18 | K-1 | L-1 | 45min | 370°C | 12 | 4 |
| Example 19 | C-19 | K-1 | L-1 | 45min | 370°C | 12 | 4 |
| Example 20 | C-20 | K-1 | L-1 | 45min | 370°C | 12 | 6 |
| Example 21 | C-21 | K-1 | L-1 | 45min | 370°C | 12 | 6 |
| Example 22 | C-22 | K-1 | L-1 | 45min | 370°C | 12 | 4 |
| Example 23 | C-23 | K-1 | L-1 | 45min | 370°C | 12 | 6 |
| Example 24 | C-24 | K-1 | L-1 | 45min | 370°C | 12 | 6 |
| Example 25 | C-25 | K-1 | L-1 | 45min | 370°C | 12 | 6 |
| Example 26 | C-26 | K-1 | L-1 | 45min | 370°C | 12 | 4 |

(continued)

| | Adhesive | Copper-based material | Resin substrate | Press time | Press Temperature | Adhesion amount (mg/m$^2$) | Adhesion |
|---|---|---|---|---|---|---|---|
| Example 27 | C-27 | K-1 | L-1 | 45min | 370°C | 12 | 6 |
| Example 28 | C-28 | K-1 | L-1 | 45min | 370°C | 12 | 6 |
| Example 29 | C-29 | K-1 | L-1 | 45min | 370°C | 12 | 6 |
| Example 30 | C-30 | K-1 | L-1 | 45min | 370°C | 12 | 6 |
| Example 31 | C-31 | K-1 | L-1 | 45min | 370°C | 12 | 4 |
| Example 32 | C-32 | K-1 | L-1 | 45min | 370°C | 12 | 5 |
| Example 33 | C-33 | K-1 | L-1 | 45min | 370°C | 12 | 6 |
| Example 34 | C-34 | K-1 | L-1 | 45min | 370°C | 12 | 6 |
| Example 35 | C-35 | K-1 | L-1 | 45min | 370°C | 12 | 6 |
| Example 36 | C-36 | K-1 | L-1 | 45min | 370°C | 12 | 6 |
| Example 37 | D-1 | K-1 | L-1 | 45min | 370°C | 12 | 3 |
| Example 38 | D-2 | K-1 | L-1 | 45min | 370°C | 12 | 3 |
| Example 39 | D-3 | K-1 | L-1 | 45min | 370°C | 12 | 5 |
| Example 40 | D-4 | K-1 | L-1 | 45min | 370°C | 12 | 5 |
| Example 41 | D-5 | K-1 | L-1 | 45min | 370°C | 12 | 5 |
| Example 42 | D-6 | K-1 | L-1 | 45min | 370°C | 12 | 4 |
| Example 43 | D-7 | K-1 | L-1 | 45min | 370°C | 12 | 5 |
| Example 44 | D-8 | K-1 | L-1 | 45min | 370°C | 12 | 4 |
| Example 45 | D-9 | K-1 | L-1 | 45min | 370°C | 25 | 6 |
| Example 46 | D-10 | K-1 | L-1 | 45min | 370°C | 25 | 6 |
| Example 47 | J-1 | K-1 | L-1 | 45min | 370°C | 12 | 4 |
| Example 48 | J-2 | K-1 | L-1 | 45min | 370°C | 6 | 6 |
| Example 49 | J-2 | K-1 | L-1 | 45min | 370°C | 12 | 6 |
| Example 50 | J-3 | K-1 | L-1 | 45min | 370°C | 12 | 6 |
| Example 51 | J-1 | K-1 | L-1 | 45min | 370°C | 100 | 6 |
| Example 52 | J-2 | K-1 | L-1 | 45min | 370°C | 100 | 6 |
| Example 53 | J-3 | K-1 | L-1 | 45min | 370°C | 100 | 6 |
| Example 54 | J-1 | K-1 | L-2 | 45min | 280°C | 12 | 3 |
| Example 55 | J-2 | K-1 | L-2 | 45min | 280°C | 12 | 3 |
| Example 56 | C-17 | K-1 | L-3 | 20min | 340°C | 12 | 3 |
| Example 57 | D-9 | K-1 | L-3 | 20min | 340°C | 12 | 4 |
| Example 58 | J-1 | K-1 | L-3 | 20min | 340°C | 12 | 4 |
| Example 59 | J-2 | K-1 | L-3 | 20min | 340°C | 12 | 6 |
| Example 60 | C-17 | K-2 | L-1 | 45min | 370°C | 12 | 5 |
| Example 61 | D-9 | K-2 | L-1 | 45min | 370°C | 12 | 3 |
| Example 62 | J-1 | K-2 | L-1 | 45min | 370°C | 12 | 5 |
| Example 63 | J-2 | K-2 | L-1 | 45min | 370°C | 12 | 6 |
| Example 64 | C-17 | K-3 | L-1 | 45min | 370°C | 12 | 6 |

(continued)

| | Adhesive | Copper-based material | Resin substrate | Press time | Press Temperature | Adhesion amount (mg/m$^2$) | Adhesion |
|---|---|---|---|---|---|---|---|
| Example 65 | D-9 | K-3 | L-1 | 45min | 370°C | 12 | 6 |
| Example 66 | J-1 | K-3 | L-1 | 45min | 370°C | 12 | 6 |
| Example 67 | J-2 | K-3 | L-1 | 45min | 370°C | 12 | 6 |

Table 5

| | Adhesive | Copper-based material | Resin substrate or material substrate other than resin | Press time | Press Temperature | Adhesion amount (mg/m$^2$) | Adhesion |
|---|---|---|---|---|---|---|---|
| Comparative Example 1 | A4 | K-1 | L-1 | 45min | 370°C | 12 | 2 |
| Comparative Example 2 | A-5 | K-1 | L-1 | 45min | 370°C | 12 | 2 |
| Comparative Example 3 | B-1 | K-1 | L-1 | 45min | 370°C | 12 | 2 |
| Comparative Example 4 | A-8 | K-1 | L-1 | 45min | 370°C | 12 | 2 |
| Comparative Example 5 | None | K-1 | L-1 | 45min | 370°C | 0 | 2 |
| Comparative Example 6 | None | M-1 | L-1 | 44min | 370°C | 0 | 1 |
| Comparative Example 7 | None | K-1 | L-2 | 45min | 280°C | 0 | 1 |
| Comparative Example 8 | None | K-1 | L-3 | 20min | 340°C | 0 | 1 |
| Comparative Example 9 | N-1 | K-1 | L-1 | 45min | 370°C | 40 | 1 |
| Comparative Example 10 | N-2 | K-1 | L-1 | 45min | 370°C | 40 | 1 |
| Comparative Example 11 | N-3 | K-1 | L-1 | 45min | 370°C | 40 | 2 |
| Comparative Example 12 | N-4 | K-1 | L-1 | 45min | 370°C | 12 | 1 |
| Comparative Example 13 | N-5 | K-1 | L-1 | 45min | 370°C | 25 | 1 |
| Comparative Example 14 | N-6 | K-1 | L-1 | 45min | 370°C | 40 | 1 |
| Comparative Example 15 | N-7 | K-1 | L-1 | 45min | 370°C | 40 | 2 |
| Comparative Example 16 | None | K-1 | O-1 | 45min | 370°C | 0 | 1 |
| Comparative Example 17 | C-4 | K-1 | O-1 | 45min | 370°C | 12 | 1 |
| Comparative Example 18 | D-1 | K-1 | O-1 | 45min | 370°C | 12 | 1 |

(continued)

| | Adhesive | Copper-based material | Resin substrate or material substrate other than resin | Press time | Press Temperature | Adhesion amount (mg/m$^2$) | Adhesion |
|---|---|---|---|---|---|---|---|
| Comparative Example 19 | C-17 | K-1 | O-1 | 45min | 370°C | 12 | 1 |
| Comparative Example 20 | J-2 | K-1 | O-1 | 45min | 370°C | 12 | 1 |
| Comparative Example 21 | None | K-1 | O-2 | 45min | 370°C | 0 | 1 |
| Comparative Example 22 | C4 | K-1 | O-2 | 45min | 370°C | 12 | 1 |
| Comparative Example 23 | D-1 | K-1 | O-2 | 45min | 370°C | 12 | 1 |
| Comparative Example 24 | C-17 | K-1 | O-2 | 45min | 370°C | 12 | 1 |
| Comparative Example 25 | J-2 | K-1 | O-2 | 45min | 370°C | 12 | 1 |
| Comparative Example 26 | None | K-1 | O-3 | 45min | 370°C | 0 | 1 |
| Comparative Example 27 | C-4 | K-1 | O-3 | 45min | 370°C | 12 | 1 |
| Comparative Example 28 | D-1 | K-1 | O-3 | 45min | 370°C | 12 | 1 |
| Comparative Example 29 | C-17 | K-1 | O-3 | 45min | 370°C | 12 | 1 |
| Comparative Example 30 | J-2 | K-1 | O-3 | 45min | 370°C | 12 | 1 |

## Claims

1. An adhesive for resin, comprising one or both of a Maillard reaction product (C) and a caramelization reaction product (D), wherein:

   the Maillard reaction product (C) is made from a carbohydrate (A) and/or a reductone (B), as well as an amine compound (G); and
   the caramelization reaction product (D) is made from a carbohydrate (A) and/or a reductone (B) .

2. A laminate comprising: a copper-based material substrate, a layer of the adhesive for resin according to claim 1, and a resin substrate, in this order.

3. An adhesive for resin, comprising one or both of a Maillard reaction product (C) and a caramelization reaction product (D), wherein:

   the Maillard reaction product (C) is made from a carbohydrate (A) and/or a reductone (B), as well as an amine compound (G) and/or an amine equivalent (H); and
   the caramelization reaction product (D) is made from a carbohydrate (A) and/or a reductone (B).

4. A laminate comprising: a copper-based material substrate, a layer of the adhesive for resin according to claim 3, and a resin substrate, in this order.

## INTERNATIONAL SEARCH REPORT

International application No.

**PCT/JP2023/023413**

### A.  CLASSIFICATION OF SUBJECT MATTER

***C09J 187/00***(2006.01)i; ***B32B 15/08***(2006.01)i; ***B32B 15/20***(2006.01)i; ***B32B 27/00***(2006.01)i
FI:   C09J187/00; B32B15/08 Z; B32B15/20; B32B27/00 D

According to International Patent Classification (IPC) or to both national classification and IPC

### B.  FIELDS SEARCHED

Minimum documentation searched (classification system followed by classification symbols)

C09J187/00; B32B15/08; B32B15/20; B32B27/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| A | JP 8-269416 A (SEKISUI CHEM. CO., LTD.) 15 October 1996 (1996-10-15)<br>entire text, all drawings | 1-4 |
| A | JP 8-20760 A (SEKISUI CHEM. CO., LTD.) 23 January 1996 (1996-01-23)<br>entire text, all drawings | 1-4 |
| A | CN 110077088 A (CHANGZHOU XUNWANDE ELECTRONIC CO., LTD.) 02 August 2019<br>(2019-08-02)<br>entire text, all drawings | 1-4 |
| A | WO 2012/133219 A1 (PANASONIC CORP.) 04 October 2012 (2012-10-04)<br>entire text, all drawings | 1-4 |
| A | JP 2016-104885 A (KNAUF INSULATION SPRL) 09 June 2016 (2016-06-09)<br>entire text, all drawings | 1-4 |
| A | JP 2017-45689 A (ASAHI GLASS CO., LTD.) 02 March 2017 (2017-03-02)<br>entire text, all drawings | 1-4 |

☑ Further documents are listed in the continuation of Box C.          ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **26 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/023413**

**C. DOCUMENTS CONSIDERED TO BE RELEVANT**

| Category* | Citation of document, with indication, where appropriate, of the relevant passages | Relevant to claim No. |
|---|---|---|
| A | JP 2020-84058 A (HENKEL JAPAN LTD.) 04 June 2020 (2020-06-04)<br>entire text, all drawings | 1-4 |
| A | JP 2018-53214 A (NICHIAS CORP.) 05 April 2018 (2018-04-05)<br>entire text, all drawings | 1-4 |
| A | JP 2004-131741 A (NIPPI, INC.) 30 April 2004 (2004-04-30)<br>entire text, all drawings | 1-4 |
| A | JP 58-176048 A (DAICEL KK) 15 October 1983 (1983-10-15)<br>entire text, all drawings | 1-4 |
| A | JP 2019-178289 A (DAINIPPON PRINTING CO., LTD.) 17 October 2019 (2019-10-17)<br>entire text, all drawings | 1-4 |

Form PCT/ISA/210 (second sheet) (January 2015)

INTERNATIONAL SEARCH REPORT
Information on patent family members

International application No.

**PCT/JP2023/023413**

| Patent document cited in search report | | | Publication date (day/month/year) | Patent family member(s) | | | Publication date (day/month/year) |
|---|---|---|---|---|---|---|---|
| JP | 8-269416 | A | 15 October 1996 | (Family: none) | | | |
| JP | 8-20760 | A | 23 January 1996 | (Family: none) | | | |
| CN | 110077088 | A | 02 August 2019 | (Family: none) | | | |
| WO | 2012/133219 | A1 | 04 October 2012 | US | 2014/0011042 | A1 | |
| | | | | EP | 2692810 | A1 | |
| | | | | CN | 103443233 | A | |
| JP | 2016-104885 | A | 09 June 2016 | US | 2013/0059075 | A1 | |
| | | | | WO | 2011/138458 | A1 | |
| | | | | EP | 2566904 | A1 | |
| JP | 2017-45689 | A | 02 March 2017 | (Family: none) | | | |
| JP | 2020-84058 | A | 04 June 2020 | (Family: none) | | | |
| JP | 2018-53214 | A | 05 April 2018 | WO | 2018/061223 | A1 | |
| JP | 2004-131741 | A | 30 April 2004 | (Family: none) | | | |
| JP | 58-176048 | A | 15 October 1983 | (Family: none) | | | |
| JP | 2019-178289 | A | 17 October 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07292483 B

**Non-patent literature cited in the description**

- Food Additives Official Standards. Labor and Welfare, 2018